# EUROPEAN PATENT APPLICATION

(11) **EP 4 309 882 A1**
(43) Date of publication of application: **24.01.2024**
(21) Application number: 23182940.9
(22) Date of filing: 02.07.2023
(51) Int. Cl.: B29C 70/02, B29C 70/04, B29C 70/36, B29C 70/66

(54) **IMPROVED METHOD FOR PRODUCING AN OBJECT BY HOT MOLDING**

(30) Priority: 06.07.2022 IT 202200014278
(71) Applicant: Alia Mentis S.r.l., 31050 Vedelago TV (IT)
(72) Inventor: Paronetto, Giuseppe, 31050 Vedelago (TV) (IT); Marcelli, Fabio, 31050 Vedelago (TV) (IT); Tessaro, Luca, 31050 Vedelago (TV) (IT)
(74) Representative: Citron, Massimiliano

(57) **Abstract**

A method is described for producing by hot molding a composite object formed of an outer shell and a core made of yielding, elastic material. To improve compactness of the object and its aesthetics, there are the steps of
- covering opposite sides of a mold cavity respectively with a first and second flexible sheets of material impregnated with curing agent,
- putting a core made of yielding, elastic material in the mold so that it is in contact with the first and second sheets;
- arranging a flexible layer of material impregnated with curing agent between at least one of said sheets and the core, so that the thickness of the flexible layer will interpose between the core and the at least one sheet forming a step between the core and the at least one sheet when the mold is closed,
- closing the mold so that said core externally is wrapped and covered (e.g. completely) by the two sheets,
- heating the mold to solidify said sheets and layer, said step being compensated in the molded object by a corresponding depression in the core volume.

## Description

The invention relates to a method for producing an object by hot molding. The object is formed of an outer shell, made of a hardening material such as carbon or fiberglass or other composite material of fiber and resin, and an inner core made of a composite material. In particular, the method is convenient for producing a *padel* paddle, a propeller blade, a missile fin, an aircraft wing, or a drift or fin for watercraft such as a surfboard or a ship hull.

*Padel* paddles, taken here as an example, are constructed by gluing together two plastic shells, or two shells made of composite fiber like fiberglass and resin, between which there has been placed in advance a layer of EVA, which has now become a standard in *padel* because of the sound it generates and the response it gives on the ball.

However, gluing is laborious to perform and difficult to industrialize. Rigid structures are often needed to support the glue as the shells are assembled and also to reinforce the assembly. And laborious grouting and finishing operations are needed before painting to fill in the depressions generated by the rough production sequence. In addition, the centering of the EVA is inaccurate so that producing a balanced paddle is difficult.

Then a method is missing in the art for producing with better quality an object such as a *padel* paddle, an object that, due to the incidence of labor cost, is produced by relocating the factory (complicating the management with the import activities).

The main object of the invention is to devise a method that mitigates or solves the above problems. A method is proposed for producing by hot molding a composite object formed of an outer shell and a solid core of yielding and elastic material, with the steps of
- covering opposite sides of a mold cavity with a first and second flexible sheets of material impregnated with curing agent, respectively,
- putting a solid core made of yielding, elastic material in the mold so that it sits between the first and second sheets;
- arranging a flexible layer of material impregnated with curing agent between at least one of said sheets (preferably both) and the core, so that the thickness of the flexible layer interposes itself between the core and the at least one sheet forming a step between the core and the at least one sheet when the mold is closed,
- closing the mold so that said core externally is wrapped and covered (e.g. completely) by the two sheets,
- heating the mold to solidify said sheets and layers, said step being compensated in the molded object by a corresponding depression in the volume of the core.

The main advantages of an object or paddle produced by the method are a fast, undemanding, and economical production cycle. The resulting object has a monolithic structure, monolithic structure obtained in a single molding cycle, no gluing, less weight, and aesthetic mold surfaces.

The method allows high-temperature-sensitive materials to be inserted during the sole molding cycle, without the risk of them degrading or deforming causing aesthetic or structural problems.

The interposition of said flexible layer between the core and a said sheet promotes the sheet compaction, the mold copying and the cohesion of the edges of the two sheets in the molded product.

A core made of yielding, elastic material is essential, because so the core material is already able to generate a mechanical thrust when it is cold, before the baking in the mold. Such thrust advantageously determines the compaction of the materials in the mold during the mold closure, thus even before the actual baking cycle begins. In addition, the nature of the core allows it during baking to yield at said step. During the compaction of the layers or sheets inside the mold the volume of the core yields toward its center or interior by a volume equal to that of the step and encompasses the step and the shape thereof. That is, by closing the mold, the geometric interference arising from the aforementioned geometric overlap is advantageously compensated by an elastic yielding and/or retroversion of the core. In addition, the core generates a force directed outwards and/or the surrounding sheets or layers, thus promoting compaction and tension of the sheets or layers for a step-free outer surface of the molded object. Baking in the mold causes the core to soften and will harden all the curing agent-impregnated material placed in the mold. A cooling cycle will allow the core to memorize the shape imprinted by the geometric interference given by the aforementioned overlap of sheet or layers (of material impregnated with curing agent) and to maintain it.

To minimize components, preferably said flexible layer is placed in direct contact with at least one of said sheets (preferably both) and the core.

In a variation, there is the step of placing said flexible layer between the hem of at least one of said sheets (preferably both) and the core. This position of the flexible layer is advantageous for welding and reinforcing the seam area between the two sheets. An advantageous and preferred way to achieve the arrangement of said flexible layer between the hem of at least one of said sheets (preferably both) and the core directly exploits a hem of a sheet to form said flexible layer. Particularly in the variant:
- the core is put into the mold so that a first part of the core is in contact with the first sheet,
- before closing the mold, a hem of the first sheet is moved to put it on a second part of the core that is opposite the first part, the second part facing the second sheet,
- the mold is closed obtaining contact between the second sheet and the displaced hem of the first sheet, the thickness of said hem forming a step between the core and the second sheet, and then
- the mold is heated to solidify the sheets.

Preferably, said hem is folded backwards so that the hem lies in a plane substantially parallel to a plane in which the central portion of the first sheet lies. Then the folded end portion of the first sheet forms in cross-section a kind of C or U in the concavity of which an outer edge of the core remains wrapped.

Preferably, two masses of yielding material are placed at each opposite side of the first sheet and said step of moving a hem for each mass, is performed. The two masses can belong to
detached pieces of yielding material, or
to the same piece of yielding material, e.g. in the shape of a ring or disc.

Preferably, the method involves the step of placing between, and in contact with, the two masses a soft material different from that which makes up the masses, e.g. EVA. This allows for example to incorporate a cushion into the finished product or to diversify the impact response. In particular, the two masses and said soft material have equal thickness.

In a variant, to counteract the expansion of the core or mass during baking, the method involves the step of wrapping or covering with a third sheet or layer, e.g. of the same nature as the first and/or second sheet, the outer surface of the core or of one or each of said masses. More preferably, to improve the encapsulation of the core or the mass by the third sheet or layer, the method includes the step of wrapping said outer surface all around so that a hem of the third sheet or layer overlaps a portion of the third sheet or layer thereby doubling there the thickness of the third sheet or layer around the core or mass, thereat the thickness of the hem of the third sheet or layer forming before baking a step between the third sheet or layer and one of said two sheets. Overlapping the hem of the third sheet or layer with part of the third sheet or layer improves, after the baking, the tightness of the third sheet or layer around the core or the mass.

In an advantageous variant, said flexible layer becomes a load-bearing and/or reinforcing structural element for the manufactured object. The flexible layer solidifies during baking, and becomes an integral rigid part of the molded object. Then by appropriately designing the geometry of the flexible layer, a rigid skeleton is created in the molded part.

Said flexible layer may become a load-bearing and/or reinforcing structural element for the produced object. The flexible layer solidifies during baking, and becomes an integral rigid part of the molded object. By appropriately arranging the flexible layer, it is possible to design a rigid internal structure of the object, which for the same stiffness allows it to be lightened.

E.g., the above step of wrapping or covering with a third sheet or layer the core or one of said masses can also create an internal reinforcement for the final object.

In an advantageous variant, the flexible layer is applied to the core or at least one of said masses to form in cross-section a C or U. When the flexible layer becomes solid it actually makes inside the molded object a load-bearing beam having a C- or U-shaped cross-section. By increasing the number of flexible layers, one can increase the stiffness.

In an advantageous variant, two cores or masses as defined above are placed between the two sheets, and
a first flexible layer is applied to a core or mass to form a C or U in cross-section, and
a second flexible layer is applied to the other core or mass to form a C or U in cross-section. The central part of the two Cs or Us is placed in mutual contact.

When the two flexible layers become solid, they coalesce together and actually make inside the molded object a load-bearing beam having an H-shaped, preferably constant, cross-section.

In an advantageous variant, the flexible layer is applied all around the core to form in cross-section an O, i.e. a tubular body. When the flexible layer becomes solid it actually makes inside the molded object a load-bearing beam having a closed, e.g. cylindrical or elliptical, preferably constant, cross section.

Even in the case of load-bearing beams with a closed cross-section, two flexible layers bent like tubes can be attached during the preparation phase. When the two flexible layers become solid they are joined together and in fact make inside the molded object a load-bearing beam having a (number-)8-shaped, preferably constant, cross-section.

It is understood that the cross-section of the beam obtainable by bending the flexible layer before baking may vary from what is described, as well as the combinations obtainable by composing sub-sections. Preferably, the cross-section of the beam is constant along the length of the beam.

If the final object has a longitudinal axis of major dimension, preferably the flexible layer extends along said axis for most of the dimension and is bent to form, in a plane orthogonal to the axis, said C-shaped, preferably constant, cross-section.

As a convenient production cycle, preferably the mold is heated to bring the composite object contained therein to a temperature between 60 °C and 110 °C for a time of 30 to 240 minutes.

In a variation, the method involves the step of heating the mold so as to keep the temperature of the yielding material below a threshold temperature so that the yielding material does not expand. This shortens the working cycle and does not stress the materials.

In a variation, the method involves the step of heating the mold so as to raise the temperature of the yielding material above a threshold temperature so that the yielding material expands. Thus the expansion is exploited to improve the copying of the mold by said sheets.

Another aspect of the invention concerns a composite object produced by the method. The object is, e.g., formed of an outer shell and a core of yielding and elastic material, and comprises:
a first and second sheet of material impregnated with curing agent that has stiffened and hardened after baking to form said outer shell,
a solid core of yielding and elastic material enclosed by the outer shell,
a layer of material impregnated with a curing agent, stiffened and hardened by baking and placed between the hem of at least one of said sheets, or generally between at least one of said sheets (preferably both) and the core, so that the thickness of the flexible layer lies flush with the outer surface of the core while remaining accommodated inside a depression in the volume of the core.

To improve the joint between the two sheets, preferably said layer is placed in direct contact with the hem of at least one of said sheets, or with at least one of said sheets (preferably both) and the core.

To minimize components, in a variant said layer consists of a hem of one of said sheets, e.g. the first one.

In particular, a first part of the core is in contact with the first sheet.

Said hem is preferably made do abut against a second part of the core that is opposite the first part, so that the second part faces the second sheet, the second sheet and the displaced hem of the first sheet being in contact.

Preferably, said hem is folded backwards so that it lies in a plane substantially parallel to a plane in which the central part of the first sheet lies.

Preferably, the core comprises two masses of yielding material placed at each opposite side of the first sheet, and each mass is covered by a displaced hem of the first sheet or, in general, by said layer.

Preferably between, and in contact with, the two masses there is placed a soft material different from that which constitutes the masses.

In a variant, the object comprises a third sheet or layer, e.g. of the same nature as the first and/or second sheet, which wraps or covers all around the outer surface of one or each of said masses or core.

The third sheet or layer behaves as said (flexible) layer.

More preferably, the third layer is arranged so as to wrap around said outer surface so that a hem of the third sheet or layer overlaps a portion of the third sheet or layer thereby doubling thereat the thickness of the third sheet or layer around the core or mass, thereat the thickness of the hem of the third sheet or layer remaining flush with the underlying surface of the third sheet or layer due to being accommodated in a complementary depression or step formed by the third sheet or layer and the volume of the core.

In an advantageous variant, the layer is applied to the core or at least one of said masses and is a rigid element with either a C- or O- or 8-shaped cross-section. In the latter two cases, the rigid element is a tubular element with a closed cross-section (circular, elliptical or polygonal in shape, for example).

In an advantageous variant, the composite object comprises:
- a core comprising two sub-cores or masses,
- a first layer applied to a sub-core or mass and forming in cross-section a C or U, and
- a second layer applied to the other sub-core or mass forming in cross-section a C or U,
- the central part of the two Cs or Us being in mutual contact and making inside the object a rigid element having an H-shaped, preferably constant, cross-section.

In an advantageous variant, the layer is applied all around the core to form an O, or a tubular body, in cross-section.

Preferably in method and the object, for greater tenacity of the union:
the third sheet or layer, or the flexible layer, extends below the hem of the first and second sheet when such hems are brought together by closing the mold; and/or
the third sheet or layer, or the flexible layer, extends on the outward-facing edge of one of said masses or core; and/or
the third sheet or layer, or the flexible layer, extends on one of said masses or the core forming in cross-section a C or U and accommodates in the cavity of the C or U an edge of one of said masses or of the core.

The curing agent is, for example, a prepreg or a resin, especially an epoxy resin, or polyester with a low-temperature heat cycle between 60-110°C.

The curing material is e.g. carbon or glass fiber, or other composite material of fiber and resin.

The material constituting the core is preferably composite and comprises, or consists of, expanded microspheres and non-expanded microspheres, the microspheres being plastic, of closed-shape, hollow, and gas-filled. Other details are described below in the preferred example.

Although only two sheets are disclosed, it is understood that the surface area covered by them and/or by the third sheet or layer can also be obtained by the union of a larger number of sheets or layers. The invention may be applied to two sheets or layers of a plurality of sheets or layers, or to all sheets or layers of the plurality. Accordingly, the step of closing the mold can take place so that said core externally
is wrapped and completely covered by the two sheets or layers, or
is wrapped and covered only partially by the two said sheets or layers, or
is only partially wrapped and covered by said two sheets but is on the whole completely wrapped and covered by said or a plurality of sheets or layers.

The advantages of the invention will be further clarified by a preferred embodiment described below with reference to the attached drawings, in which:
- Figures 1-4 schematically show a molding sequence;
- Figure 5 schematically shows a *padel*paddle;
- Figures 7-8 schematically show other steps of the method;
- Figures 9-11 schematically show variants for steps of the method,
- Figures 12-14 schematically show variants for steps of the method.

In the figures equal references indicate same or analogue parts, and described as in use. To avoid crowding the drawings, some element is not indicated repeatedly.

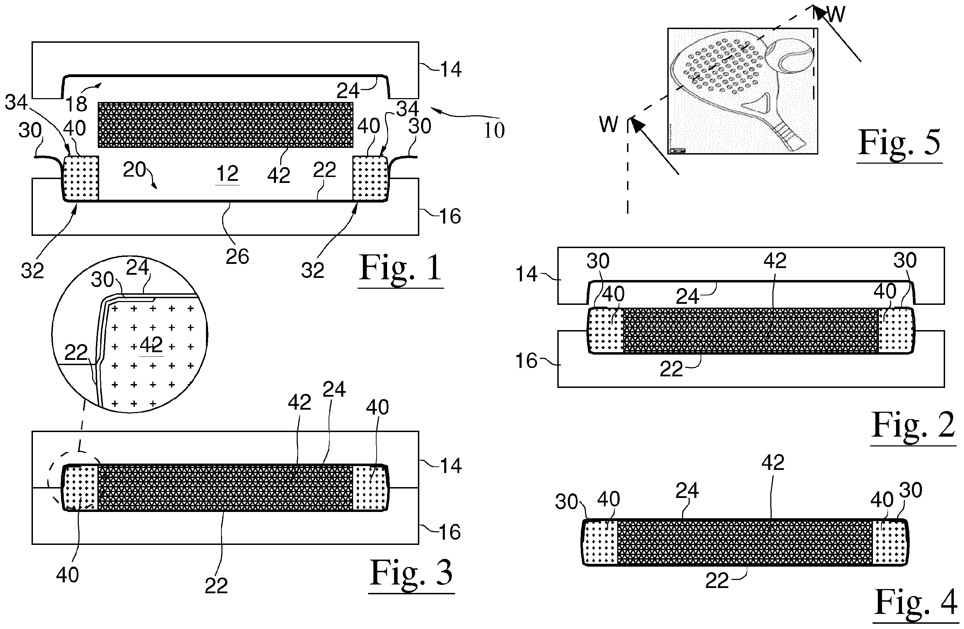

Fig. 5 shows a well-known *padel* paddle, which can also be produced with the sequence of method steps shown in Figs. 1-4 or Figs. 9-14. The steps show in particular the construction of the paddle with cross-sections according to the W plane in Fig. 5.

Referring to Fig. 1, a mold 10 has a cavity 12 defined (in a known way) by the union of two plates 14, 16 each having a semi-cavity 18, 20.

The two semi-cavities 18, 20 are opposite each other and are covered with a first and second carbon sheet 22, 24 impregnated with a curing agent such as a resin, e.g. epoxy or prepreg (e.g. type-IMP762BD Impregnatex epoxy resin), respectively.

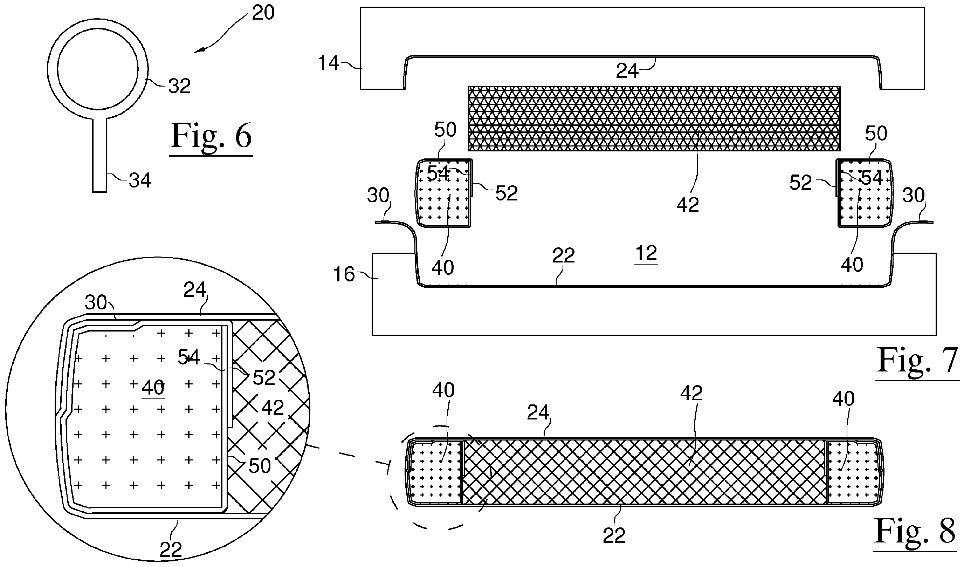

Next, a core 40, made of plastically yielding material, is placed in the cavity 12 so that a first part or side 32 of the core 40 is in contact with the first sheet 22 (which is preferably for convenience the bottom one). The core 40 will form a nucleus of the finished paddle, and is shaped (fig. 6) to comprise
a closed ring 32 to constitute the perimeter of the batting surface for the ball, and
a straight segment 34 to constitute the handle of the paddle (see Fig. 6).

Then the core 40 is placed in the mold 10 whose cavity 12 is essentially complementary to the perimeter of the core 40.

A soft material 42, e.g. EVA, different from that constituting the ring 32, is placed at the center of the ring 32. One can also place directly in the mold the assembly given by the core 40 and the material 42.

Then a hem 30 of the first sheet 22 is folded to be put on a second part 34 of the core 40, wherein the part 34 is opposite the first part 32 and facing toward the second sheet 24.

In the example shown, the hem 30 is folded preferentially backwards to form a U in cross-section.

Preferably, the hem 30 is folded so that the hem 30 lies in a plane substantially parallel to a plane in which a central part 26 of the first sheet 22 lies.

Then the mold 10 is closed by juxtaposing the two plates 14, 16 obtaining the contact between the second sheet 24 and the hem 30.

The mold 10 is then heated to bring the assembly contained therein to a temperature of 60 to 110 °C for a time of about 30 to 240 min. to solidify the carbon sheets 22, 24.

When the baking is complete, the two sheets 22, 24 have joined together perfectly along the edge of the paddle. In addition, the excess volume formed by the hem 30 is compensated for during the baking by the material forming the core 40. This material yields and deforms to create a complementary seat for the hem 30, so that the outer surface of sheet 24 remains flat and without steps.

The mold 10 is heated by keeping the temperature of the core 30 below a threshold temperature so that it does not expand (e.g., keeping the temperature of the core 30 at 90 °C for a time of 30-240 min.). When the finished object (Fig. 4) is taken out of the mold, the outer surface of the sheet 24 is not affected by the underlying hem 30.

To increase productivity, it would be preferable to increase the baking temperature in the mold 10.

However, a higher temperature can cause the core 40 to expand toward the material 42 with undesirable deformation and unpredictable mass distributions that unbalance the paddle. To solve this problem, steps of a more preferred method are shown in Figs. 7-8, where the mold 10 is heated by bringing the temperature of the material 42 above a threshold temperature so that it expands.

Unlike the previous method, there is now the additional step of wrapping with a third sheet 50 of carbon, impregnated like the first and second sheets 14, 16, the outer surface of the ring 32 so that a hem 52 of the third sheet 50 overlaps an opposite hem 54 of the third sheet 50.

In this way, the sheet 50 encloses the ring 32 and hinders an excessive expansion of the core 40, which can expand by the little necessary to maximize the copying of the cavities 12, 14 by the sheets 22, 24 and the compaction of the entire molded object.

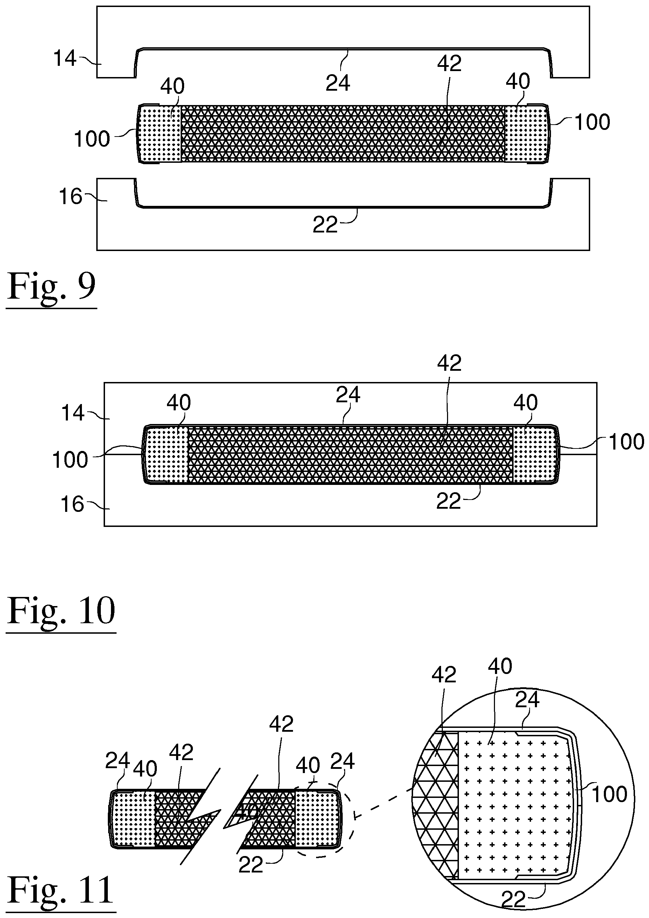

Figs. 9-11 show steps of another embodiment of the method.

As before, the cavity 12 is defined by the union of the plates 14, 16 whose semi-cavities 18, 20 are covered by the sheets 22, 24.

In this variant, the outer edges of the core 40, those opposite the material 42, are covered with a layer of carbon 100 (see Figs. 9 and 11).

Then (fig. 10) the core 40 with the soft material 42 is placed into the cavity 12 as in fig. 3, and the mold 10 is closed by placing the two plates 14, 16 side by side, obtaining contact between the sheets 22, 24 and the core 40. Then baking is carried out as described for the previous examples.

Preferably, the layer 100 is wide enough to extend under both the juxtaposed hems of the sheets 22, 24. It can be seen (fig. 11) that in the final piece the layer 100 joins and reinforces the bonding area at the juxtaposed hems of the sheets 22, 24 but has no steps or deformities thanks to the fact, again, that the core 40 has given way and created a depression to receive the excess of internal volume represented by the layer 100.

The material forming the core 40 is preferably composite and comprises, or consists of, expanded microspheres and non-expanded microspheres, the microspheres being plastic, of closed-shaped, hollow, and gas-filled.

The core 40 is in turn preferably made via molding, by molding a material, e.g. a powder or granular or cellular material. In the category of powder or granular or cellular material, preferably a cellular material composed of expanded particles and non-expanded particles is used for the core, e.g. the core being composed by weight of 20-50% expanded particles (microspheres) and 80-50% non-expanded particles (microspheres). The cellular material solidifies upon heating in a mold. Once solidified it can re-expand if its temperature is raised between about 100 and 200 °C, particularly up to 160 °C. The material offers the advantage, essential for application as a core, that it is able to expand each time it is heated, improving the forming and molding of the composite layer. It begins to expand at about 110 °C.

The expansion temperature (Texp) may change slightly with the percentages of the composition and/or the thickness of the core to be molded.

Physically, it happens that with the heat of the curing mold, where the composite hardens, all the microspheres expand (the expanded ones, however, less). The microspheres or non-expanded spheres are made of plastic material, and they are closed spheres. They are hollow and filled with gas that expands as it heats up, causing the sphere to expand and decrease the overall density of the material.

The expanded microspheres are e.g. made of plastic material, especially thermoplastic acrylic resin. They are closed, hollow, gas-filled spheres; and they act as the binder or filler for other spheres. In fact, the expanded spheres are the filling element (filler), the non-expanded ones act as the binder.

The unexpanded particles can be replaced with another material or binding component, e.g. an adhesive, and/or any viscous glue e.g., polyurethane, a case in which the production system would have to be modified accordingly, and the yield might vary.

Important characteristics of the microspheres are:
- they are closed spheres, because the closed structure allows energy to be absorbed and dissipated;
- they have low density and thus are lightweight;
- they can stick to each other, creating a compact material.

Microspheres that can be used for the invention are e.g. contained in the material Expancell^{®}. The particles are generally spherical in shape and are very small (10-40 µm in diameter). Note, however, that the size is not essential.

The sheets 22, 24 and/or the layer 100 may also be made of fiberglass or other composite material of fiber and resin.

The area covered by the sheets 22, 24 and/or the layer 100 may be obtained by joining a plurality of sheets or layers.

The shape, type, and numerosity of the core 40 and the material 42 are not essential.

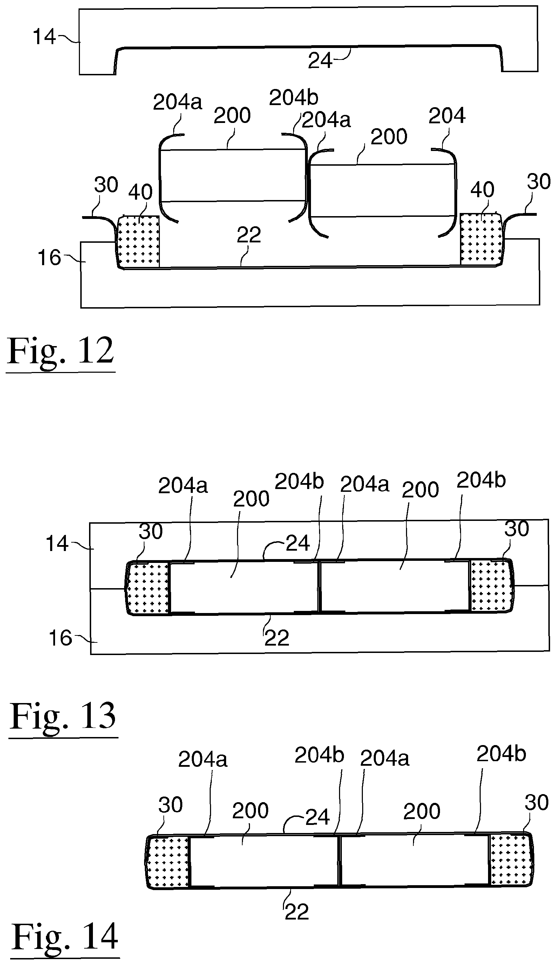

Fig. 12 shows the preparation for molding an internally reinforced object, e.g. a propeller blade or a fin. A same effect can also be obtained with the previous variants.

The mold 10 is constructed as before and is lined with the first and second sheets of carbon 22, 24.

Preferably, the core 40 is placed in the cavity 12 of the mold 10 in the shape of a closed ring 32, At the center of the ring 32 are placed two detached pieces of material 200, the same as or different from the material forming the ring 32, e.g. EVA.

The core 40 may also be absent. The shape, type, location and number of the core 40 and the pieces 200 are not essential. The fold of the hem 30 of the first sheet 22 is optional too.

The two opposite sides of each piece 200 are covered with an impregnated carbon sheet, indicated with 204a and 204b for the left and right sides respectively in the figure. The sheet 204a, 204b encircles one side of the piece 200 and forms a C in cross-section, whose cavity accommodates the side of the piece 200.

The sheet 204a, b preferably extends along a major direction of the object to be molded, in the drawing orthogonally to the drawing sheet.

Preferably, the adjacent sheets 204b and 204a of each piece 200 touch centrally.

The mold is closed (fig. 13) and brought to baking in the same manner as described before.

The four sheets 204 at the end of molding will be rigid elements embedded within the final object, and each sheet 204a, 204b alone will form a stiffening rib with C-shaped cross-section. The adjacent sheets 204b, 204a now are one piece and form stiffening rib with H-shaped cross-section.

Note that the stiffening elements formed by the solidified sheets 204 are very light but strong and very stiff. A bending of them entails the traction of the carbon fibers that make them up, namely exactly the direction along which the carbon is maximally resilient.

Note also that, as with the variants described before, the thickness of the sheet 204 lies flush with the outer surface of the piece 200, remaining lodged within a depression in the volume of the piece 200. The piece 200 during baking has deformed and caved in locally to accommodate the volume of the hem of the sheet 204.

For the sheets 204, the placement relative to the sheets 22, 24 and the numerosity is not essential.

The steps in Figs. 12-14 can also be exploited for the method shown in Figs. 1-11.

## Claims

1. Method for producing by hot molding a composite object formed of an outer shell and a core made of yielding, elastic material, with the steps of
- covering opposite sides of a mold cavity respectively with a first and second flexible sheets of material impregnated with curing agent,
- putting a core made of yielding, elastic material in the mold so that it is in contact with the first and second sheets;
- arranging a flexible layer of material impregnated with curing agent between at least one of said sheets and the core, so that the thickness of the flexible layer will interpose between the core and the at least one sheet forming a step between the core and the at least one sheet when the mold is closed,
- closing the mold so that said core externally is wrapped and covered (e.g. completely) by the two sheets,
- heating the mold to solidify said sheets and layer, said step being compensated in the molded object by a corresponding depression in the core volume.

2. Method according to claim 1, with the step of wrapping or covering with an additional sheet or layer, of the same nature as the first and/or second sheet, the outer surface of a peripheral edge of the core so that an edge of the first sheet overlaps the additional sheet or layer.

3. Method according to claim 1 or 2, with the step of wrapping or covering with an additional sheet or layer, of the same nature as the first and/or second sheet, the outer surface of the core so that the additional sheet or layer extends on the core forming in cross-section a C or U and accommodates in the cavity of the C or U an edge of the core.

4. Method according to claim 1 or 2 or 3, wherein
- the core is put into the mold so that a first part of the core faces the first sheet,
- before closing the mold, one edge of the first sheet is displaced to put it on a second part of the core that is opposite the first part, so that the second part faces the second sheet,
- the mold is closed obtaining contact between the second sheet and the displaced edge of the first sheet.

5. Method according to claim 4, wherein said edge is folded backwards so that the edge lies in a plane substantially parallel to a plane in which the central part of the first sheet lies.

6. Method according to any previous claim, wherein as the core two masses of yielding material are placed at each opposite side of the first sheet and said step of displacing the edge of the first sheet is performed for each mass.

7. Method according to claim 6, wherein a soft material different from that which constitutes the masses, is placed between, and e.g. in contact with, the two masses.

8. Method according to any previous claim, with the step of maintaining the temperature of the yielding material below a threshold temperature so that the yielding material does not expand.

9. Method according to a previous claim 1 to 7, with the step of raising the temperature of the yielding material above a threshold temperature so that the yielding material expands.

10. Method according to any preceding claim, wherein the material constituting the core is composite and comprises, or consists of, expanded microspheres and non-expanded microspheres, the microspheres being plastic material, of closed shape, hollow, and gas-filled.
